(19) Europäisches Patentamt

European Patent Office

Office européen des brevets

(11) **EP 1 348 086 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(21) Anmeldenummer: **01984735.9**

(22) Anmeldetag: **29.12.2001**

(51) Int Cl.:
**F16H 61/02** (2006.01)

(86) Internationale Anmeldenummer:
**PCT/DE2001/004947**

(87) Internationale Veröffentlichungsnummer:
**WO 2002/053952 (11.07.2002 Gazette 2002/28)**

(54) **SYSTEM ZUR GETRIEBESTEUERUNG**

ENGINE CONTROL SYSTEM

SYSTEME DE COMMANDE DE BOITE DE VITESSES

(84) Benannte Vertragsstaaten:
**DE FR GB**

(30) Priorität: **30.12.2000 DE 10065781**

(43) Veröffentlichungstag der Anmeldung:
**01.10.2003 Patentblatt 2003/40**

(73) Patentinhaber: **ROBERT BOSCH GMBH**
**70442 Stuttgart (DE)**

(72) Erfinder:
• **FREI, Rasmus**
**71638 Ludwigsburg (DE)**
• **FRANK, Andreas**
**71063 Sindelfingen (DE)**
• **PAEULGEN, Markus**
**73728 Esslingen/Neckar (DE)**
• **POLJANSEK, Marko**
**72768 Reutlingen (DE)**

(56) Entgegenhaltungen:
EP-A- 0 653 730     DE-A- 3 922 051
DE-A- 4 111 023     DE-A- 4 136 613
DE-A- 19 524 914    DE-A- 19 733 464
DE-A- 19 748 424    DE-A- 19 814 483

• WELTER A: "DIE ADAPTIVE GETRIEBESTEUERUNG FUER DIE AUTOMATIKGETRIEBE DER BMW FAHRZEUGE MIT ZWOELFZYLINDERMOTOR" ATZ AUTOMOBILTECHNISCHE ZEITSCHRIFT, FRANCKH'SCHE VERLAGSHANDLUNG. STUTTGART, DE, Bd. 94, Nr. 9, 1. September 1992 (1992-09-01), Seiten 428-430,432,43, XP000297447 ISSN: 0001-2785 in der Anmeldung erwähnt
• WELTER A ET AL: "DIE ADAPTIVE GETRIEBESTEUERUNG FUER BMW-AUTOMOBILE" ATZ AUTOMOBILTECHNISCHE ZEITSCHRIFT, FRANCKH'SCHE VERLAGSHANDLUNG. STUTTGART, DE, Bd. 95, Nr. 9, 1. September 1993 (1993-09-01), Seiten 420-421,423-42, XP000390501 ISSN: 0001-2785 in der Anmeldung erwähnt

EP 1 348 086 B1

**Beschreibung**

Stand der Technik

Die Erfindung betrifft ein System zur Einstellung einer Getriebeübersetzung bei einem in einem Kraftfahrzeug eingebauten Getriebe.

Bei der Steuerung eines Stufenautomaten (AT), eines automatisierten Schaltgetriebes (ASG) oder eines stufenlosen Getriebes (CVT) sind adaptive Getriebesteuerungen beispielsweise bekannt aus der DE 39 22 051 A und der DE 41 36 613 C sowie aus den Artikeln ATZ, Automobiltechnische Zeitschrift 94 (1992) 9, Seiten 428 ff. und ATZ, Automobiltechnische Zeitschrift 95 (1993) 9, Seite 420 ff. Bei Automatikgetrieben werden die Übersetzungsänderungen im allgemeinen abhängig von der Fahrzeuglängsgeschwindigkeit und von der Motorlast (Drosselklappenwinkel) bestimmt. Dies geschieht mittels eines Kennfeldes. Bei adaptiven Getriebesteuersystemen kann das Kennfeld, mittels dem die Übersetzungsänderungen bestimmt werden, an das Verhalten des Fahrers (Fahrertyp), an die Verkehrssituation und/oder an die Fahrsituation, denen das Fahrzeug unterliegt, angepaßt werden. Bei der Einstufung des Verhaltens des Fahrers wird im allgemeinen bewertet, ob dem Fahrer mehr an einer fahrleistungsorientierten Fahrweise oder mehr an einer verbrauchsoptimierten Fahrweise gelegen ist. Bei der Bewertung der Verkehrs- bzw. Fahrsituation kann beispielsweise unterschieden werden, ob sich das Fahrzeug im Stadtverkehr, vor bzw. in einer Kurve, an einem Berg oder im Schubbetrieb befindet. Je nach Bewertung der obengenannten Punkte werden aus einer Anzahl von verschiedenen Kennlinien die jeweils passende ausgewählt. Weiterhin kann eine Verschiebung eines Grundschaltkennfeldes, wie in der DE 195 24 914 A beschrieben, vorgesehen sein.

Neben den sogenannten Fahrsituationen wie z.B. eine Berg-auf-Fahrt, ein Fahren auf glatter Fahrbahn (Winter), ein Fahren mit kaltem Motor (Warmlauf) oder ein Fahren in der Kurve (Kurve) hat die Typisierung des Fahrers des Fahrzeugs einen entscheidenden Einfluß auf die Wahl des einzustellenden Getriebegangs. Hier wird in der Regel ein-, zwei- oder mehrstufig oder kontinuierlich zwischen dem mehr kraftstoffverbrauchsorientierten und dem mehr fahrleistungsorientierten Fahrertyp unterschieden. Zur Bestimmung des sogenannten Fahrertyps sind unterschiedliche Methoden bekannt.

Aus der DE 41 11 023 A ist eine hierarchisch strukturierte Steuerung der Elemente des Antriebsstrangs eines Kraftfahrzeugs (z.B. Motor, Kupplung/Drehmomentenwandler, Getriebe) bekannt. Eine Softwarestruktur zur Bestimmung der Getriebeübersetzung zeigt die DE 198 14 483 A.

Aus der DE 197 48 424 A1 , das die Merkmale des Oberbegriffs des unabhängigen Anspruchs 1 zeigt, ist ein System zur Einstellung einer Getriebeübersetzung bei einem in einem Kraftfahrzeug eingesetzten Getriebe bekannt. Ein erstes Ermittlungsmittel dient zur Ermittlung eines längerfristigen Fahrverhaltens des Fahrers. Ein zweites Ermittlungsmittel erfasst die Dynamik der Betätigung des Fahrpedals und liefert einen Dynamikgrad als eine zweite das Fahrverhalten des Fahrers repräsentierende Größe. Abhängig von den ermittelten Werten wird ein Maximalwert bestimmt oder ein Maximumbilder eingesetzt. Der so gebildete Wert wird zur Einstellung der Übersetzung verwandt.

Das Ziel der vorliegenden Erfindung ist es, die Bestimmung des Fahrertyps so zu gestalten, dass das System möglichst einfach an unterschiedliche Erfordernisse angepasst werden kann.

Vorteile der Erfindung

Das erfindungsgemäße System zur Einstellung einer Getriebeübersetzung bei einem in einem Kraftfahrzeug eingebauten Getriebe weist wenigstens zwei Ermittlungselemente auf, mit denen aufgrund unterschiedlicher Ermittlungsmodi Werte ermittelt werden, die das Fahrverhalten des Fahrers des Kraftfahrzeuges repräsentieren und Zählermittel, mit denen abhängig von den ermittelten Werten ein Zählerwert geändert wird. Ermittlermittel ermitteln aus dem Zählerwert einen Fahrertypwert, der das Fahrverhalten des Fahrers repräsentiert. In Abhängigkeit von diesem Fahrertypwert wird die Übersetzung einstellt. Erfindungsgemäß sind Verwaltermittel vorgesehen, welche die Ermittlungselemente entsprechend einer vorgegebenen Priorität aufrufen und veranlassen, die ermittelten Werte an die Zählmittel zu übermitteln, wobei die Ermittlungselemente einheitliche Schnittstellen zu den Verwaltermitteln und einheitliche Schnittstellen zu den Zählermitteln aufweisen.

Wie eingangs schon erwähnt ist die Ermittlung eines Fahrertyps zur Beeinflussung der Schaltstrategie eines Stufenautomaten (AT), eines automatisierten Schaltgetriebes (ASG) oder eines stufenlosen Getriebes (CVT) ein seit Jahren bekanntes Verfahren. Gemäß der vorliegenden Erfindung wird die Fahrertyperkennung in variante und invariante Teile aufgespalten, anschließend wird darauf aufbauend modularisiert. Das dabei gewonnene System wird dann in einem objektorientierten Modell abgebildet. Dadurch ist ein System der Fahrertyperkennung entstanden, das besondere Vorteile bei der Wartung, der Wiederverwendbarkeit und der Applizierbarkeit durch den Kraftfahrzeughersteller bietet. Die Methode, einen Fahrertyp zur Beeinflussung der Schaltstrategie eines automatisch zu stellenden Getriebes zu verwenden, ist zur Zeit sehr unterschiedlich bei den Kraftfahrzeugherstellern verbreitet; während einige Hersteller schon seit Jahren diese Methode einsetzen und daher bereits eine deutliche Vorstellung und Ausprägung von der Art und Weise besitzen, nach welchen Gesichtspunkten ein Fahrertyp zu ermitteln ist, wird bei anderen Herstellern bei der Getriebesteuerung bisher noch kein Fahrertyp verwendet. Das erfindungsgemäße System gewährleistet einen einheitlichen Ermittlungsablauf, in den die speziellen Wünsche der Kraftfahrzeughersteller in den varianten Teilen eingebunden werden können. Um eine Ausgangsbasis für die Hersteller zu bieten, die bei der Getriebesteuerung bisher noch kein Fahrertyp verwenden, wurde erfindungsgemäß eine spezielle Ausprägung des varianten Teils der Fahrertypermittlung entwickelt, die in besonders kurzer und knapper Form dennoch einen brauchbaren Fahrertyp zur Verfügung stellen kann. Diese Ausprägung dient dem Ausführungsbeispiel der vorliegenden Erfindung als inhaltliches Beispiel.

In einer weiteren vorteilhaften Ausgestaltung der Erfindung sind die Zählermittel derart ausgestaltet, dass abhängig von den abgerufenen Werten

- der Zählerwert erhöht oder erniedrigt wird,
- der Zählerwert auf einen bestimmten Wert gesetzt wird und/oder
- eine obere und/oder untere Grenze für den Zählerwert gesetzt wird.

In einer besonders vorteilhaften Ausgestaltung ist vorgesehen, dass in den Verwaltermitteln abgespeichert ist, welche der Ermittlungselement abrufbar und welche der Ermittlungselement nicht abrufbar sind. Insbesondere können die Verwaltermittel derart ausgestaltet sein, dass wenigstens ein Ermittlungselement nicht abgerufen wird, das heißt im Fahrzeugbetrieb nie abgerufen wird bzw. deaktiviert ist.

Die oben genannte Variante der Erfindung macht besonders den Vorteil der einfachen Applizierbarkeit deutlich. Die unterschiedlichen Ermittlungselemente können, je nach Wunsch des Fahrzeugherstellers, in beliebiger Kombination zur Ermittlung des Fahrertyps beitragen. Hierzu müssen lediglich die (varianten) Verwaltermittel entsprechend programmiert werden, während die anderen Komponenten der Fahrertypermittlung, insbesondere die Ermittlungselemente, unverändert bleiben.

In einer anderen vorteilhaften Ausgestaltung der Erfindung sind die Verwaltermittel derart ausgestaltet, dass das Abrufen wenigstens eines der Ermittlungselemente abhängig von der Ermittlung der Werte eines anderen der Ermittlungselemente geschieht. Bei dieser Ausgestaltung der Erfindung koordinieren die (varianten) Verwaltermittel, welche der Ermittlungselemente in welcher Reihenfolge aktiv sein dürfen bzw. welche der Ermittlungselemente parallel zu anderen Ermittlungselementen aktiv ihren Beitrag zur Fahrertypbestimmung liefern dürfen.

Die Ermittlermittel können derart ausgestaltet sein, dass der momentane Zählerwert vorgebbaren Teilintervallen zugeordnet wird und aus der Zuordnung zu einem der Teilintervalle der Fahrertypwert ermittelt wird, der das Fahrverhalten des Fahrers des Kraftfahrzeugs repräsentiert.

Die Ermittlungselemente können derart ausgestaltet sein, dass

- während des Anfahrvorgangs des Fahrzeugs die Stellung des vom Fahrer des Kraftfahrzeugs betätigten Fahrpedals zur Ermittlung eines ersten Wertes, der das Fahrverhalten des Fahrers des Kraftfahrzeugs repräsentiert, ausgewertet wird, und/oder
- die Änderungsgeschwindigkeit der Stellung des vom Fahrer des Kraftfahrzeugs betätigten Fahrpedals zur Ermittlung eines zweiten Wertes, der das Fahrverhalten des Fahrers des Kraftfahrzeugs repräsentiert, ausgewertet wird, und/oder
- das Überschreiten der Stellung des vom Fahrer des Kraftfahrzeugs betätigten Fahrpedals über einen vorgebbaren Schwellenwert zur Ermittlung eines dritten Wertes, der das Fahrverhalten des Fahrers des Kraftfahrzeugs repräsentiert, ausgewertet wird, und/oder
- ein vierter Wert, der das Fahrverhalten des Fahrers des Kraftfahrzeugs repräsentiert, von dem Quotienten aus der Stellung des vom Fahrer des Kraftfahrzeugs betätigten Fahrpedals und der Fahrgeschwindigkeit des Kraftfahrzeugs ermittelt wird.

Weitere vorteilhafte Ausgestaltungen sind den Unteransprüchen zu entnehmen.

Im Hinblick auf verschiedene Kriterien ergeben sich folgende Vorteile:

- Einfache Applizierbarkeit des erfindungsgemäßen Systems:

    Die Priorität verschiedener Aspekte für die Fahrertypbestimmung (unterschiedliche Ermittlungsmodi in den Ermittlungsmitteln) läßt sich beliebig und ohne Veränderung der Ermittlungsmittel in den Verwaltermitteln applizieren.

- Erweiterbarkeit des erfindungsgemäßen Systems:

    Die Anzahl der Ermittlungsmittel ist praktisch unbegrenzt. Die Erweiterung der erfindungsgemäßen Fahrertyperkennung ist einfach, da das erfindungsgemäße System fest definierte Schnittstellen zur Verfügung stellt. Für ein neues Ermittlungsmittel muß nur ein Identifikation-Code vergeben werden und in den Verwaltermitteln bekannt gemacht werden bzw. abgespeichert werden.

- Funktionalität des erfindungsgemäßen Systems:

  Da die eigentliche Fahrertypbewertung (in den Ermittlungselementen, in den Ermittlermitteln und in den Zählermitteln) nicht in die Priorisierung (in den Verwaltermitteln) eingeht, ist eine hohe Flexibilität gegenüber unterschiedlicher Anforderungen verschiedener Fahrzeughersteller gegeben.

- Wiederverwendbarkeit des erfindungsgemäßen Systems:

  - Für unterschiedliche Anforderungen des Gesamtsystems müssen nur die einzelne Ermittlungselemente aktiviert oder deaktiviert oder geändert werden; das Gesamtsystem und die Struktur zur Fahrertyperkennung bleiben jedoch unverändert.
  - Für gleiche Teilanforderungen in unterschiedlichem Kontext können durch die definierten Schnittstellen einzelne Ermittlungselemente einfach ausgetauscht werden.
  - Querverbindungen zwischen Ermittlungselementen zur gegenseitigen Priorisierung, die eine Wiederverwendung stark behindern würde, werden durch die Priorisierung durch die.Verwaltermittel vermieden.

Zeichnung

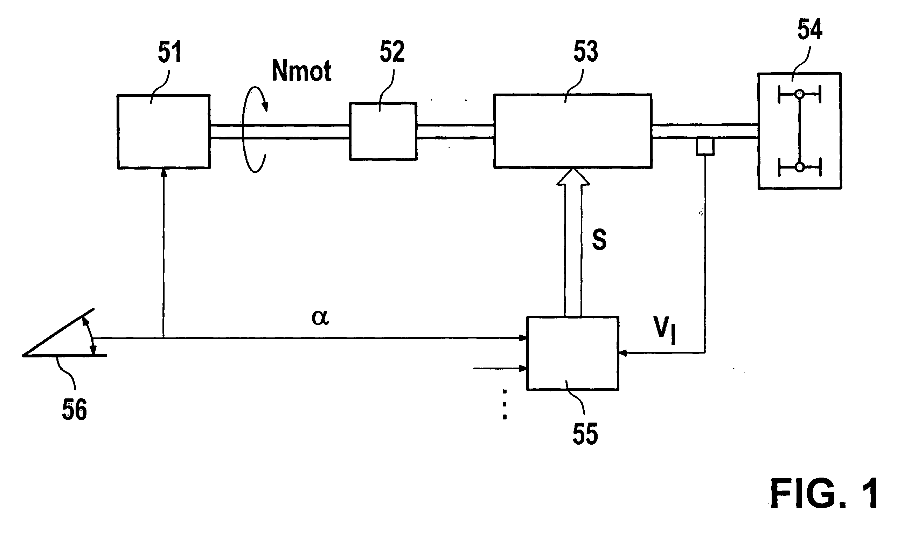

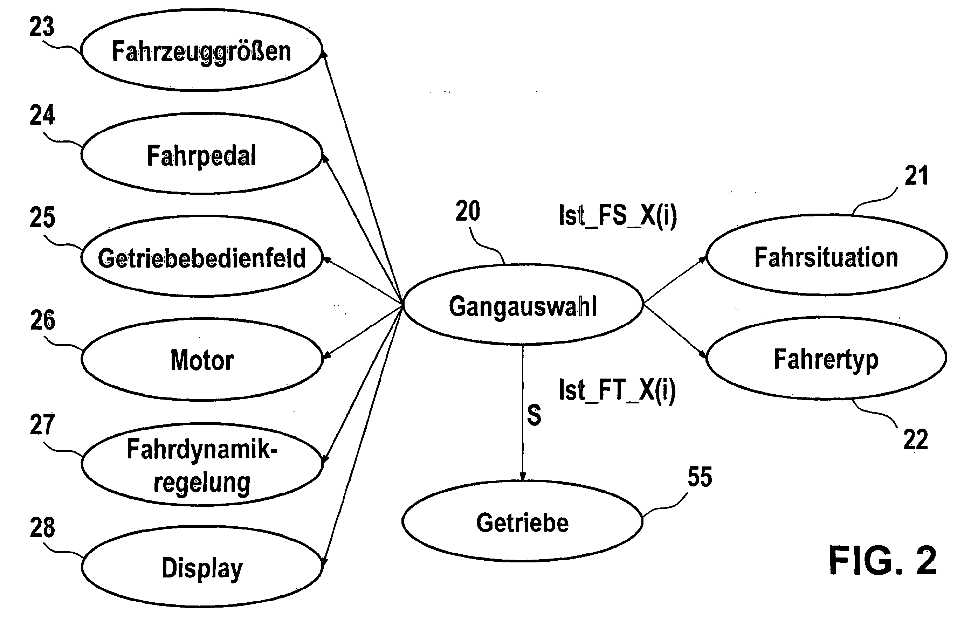

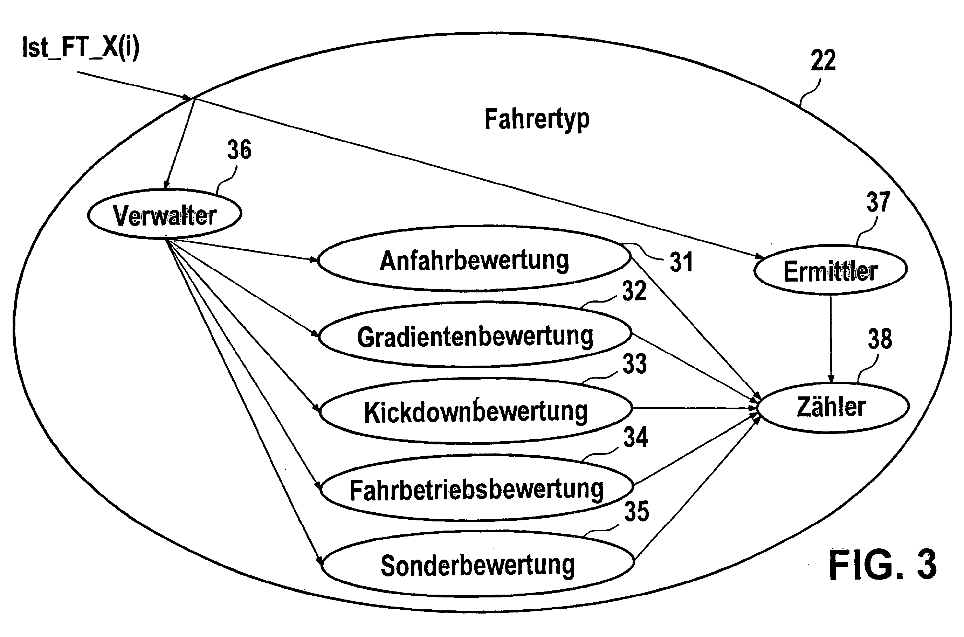

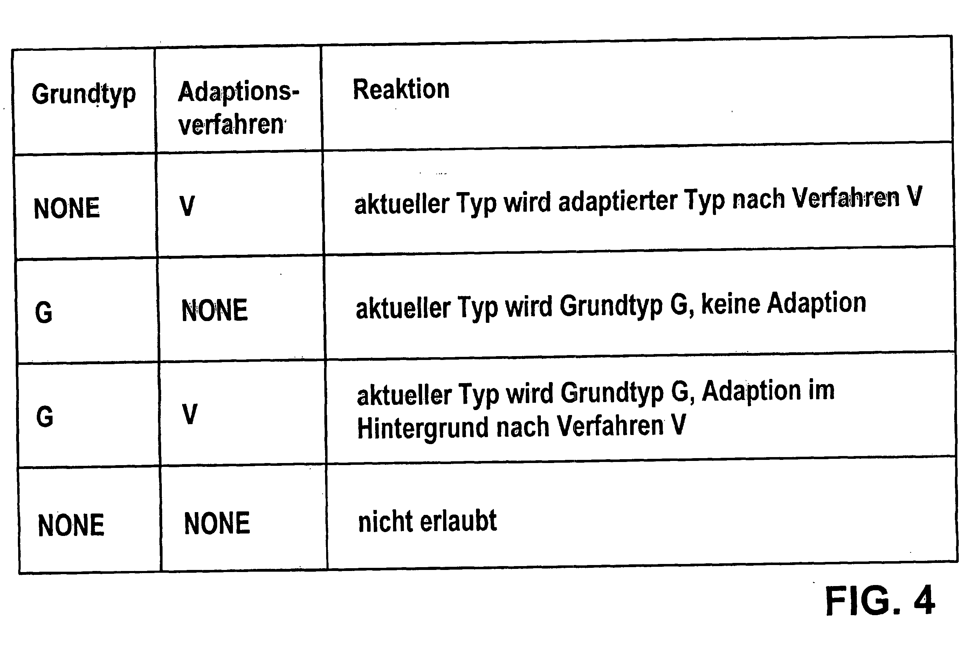

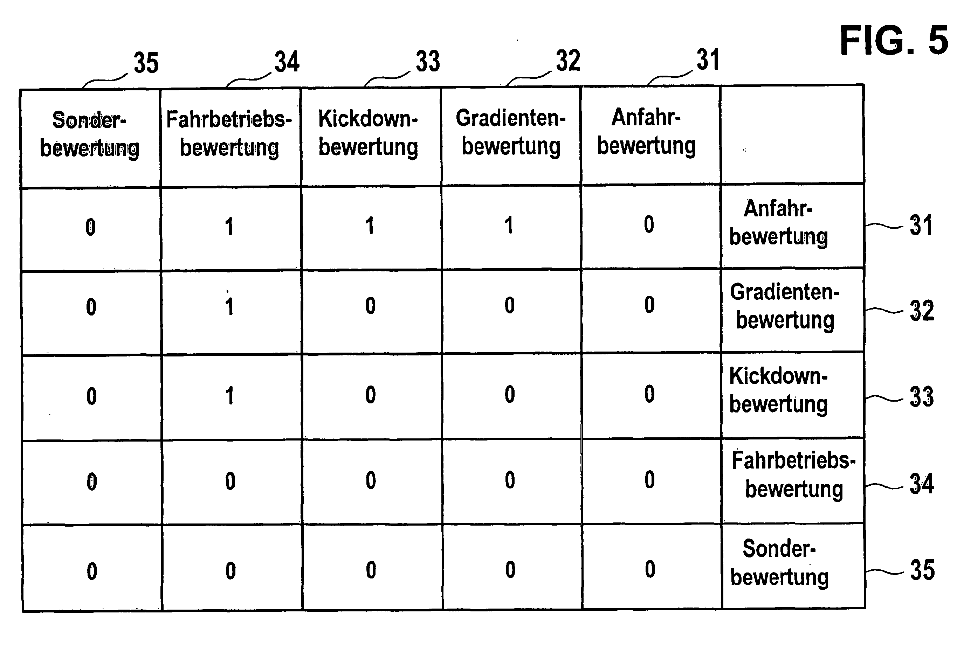

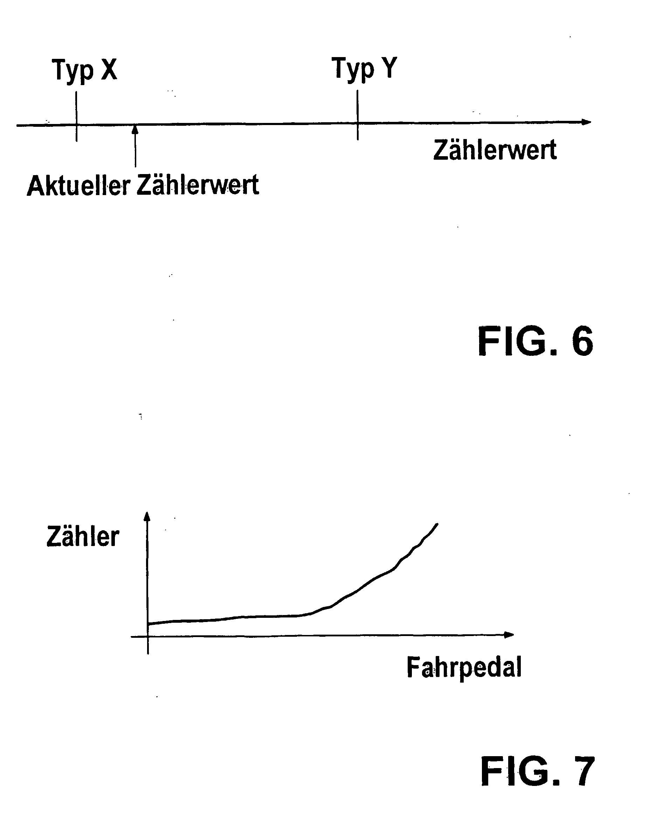

Die Figur 1 stellt schematisch den Antriebsstrang eines Kraftfahrzeug anhand eines Blockschaltbildes dar. Die Figur 2 zeigt eine Gesamtübersicht der Struktur der Getriebesteuerung, während die Figur 3 den Block Fahrsituation detailliert offenbart. In den Figuren 4 und 5 sind Tabellen dargestellt, während die Figuren 6, 7, 8, 9 und 10 verschiedenen Abhängigkeiten verschiedener Größen zeigen.

Ausführungsbeispiel

Anhand der im folgenden beschriebenen Ausführungsformen soll die Erfindung detailliert beschrieben werden.
Die Figur 1 zeigt schematisch den Antriebsstrang eines Kraftfahrzeugs. Der Fahrzeugmotor 51 mit der Motordrehzahl Nmot ist dabei über eine Kupplung oder einen Drehmomentenwandler 52 und über das Getriebe 53 mit den Antriebsrädern 54 des Fahrzeugs verbunden. Der Fahrer des Fahrzeugs betätigt das Fahrpedal 56 und stellt einen Fahrpedalwinkel $\alpha$ ein. Durch die Stellung $\alpha$ des Fahrpedals 56 wird die Leistung und/oder das Moment des Fahrzeugmotors 51 gesteuert. Weiterhin werden die Stellung $\alpha$ des Fahrpedals 56 sowie weitere Signale der Getriebsteuerungseinheit 55 zugeführt. Als weitere Signale kommen beispielsweise die Signale eines Querbeschleunigungssensors, der Raddrehzahlsensoren, eines Temperatursensors und/oder Signale aus der Motorsteuerung in Frage. Die Getriebsteuerungseinheit 55 bestimmt dann im wesentlichen abhängig von den Eingangssignalen einen Getriebegang, der mittels des Signals S am Getriebe 53 eingestellt wird.
Die Figur 2 zeigt eine Gesamtübersicht der Struktur einer Getriebesteuerung. Hierbei findet die eigentliche Auswahl des einzustellenden Getriebegangs in der Gangauswahl 20 statt. Diese Ganginformationen wird als Stellsignal S dem Getriebe 53 (Figur 1) zugeführt.
Die Informationen zur Ermittlung des einzustellenden Getriebegangs werden der Gangauswahl 20 von einzelnen Komponenten zugeleitet. Dies kann beispielsweise durch konkrete Abfragebefehle seitens der Gangauswahl 20 geschehen. Als Komponenten sind beispielhaft folgenden Blöcke in der Figur 2 aufgeführt:

- Im Block Fahrzeuggrößen 23 sind fahrzeugindividuelle Daten gespeichert.
- Vom Block Fahrpedal 24 ist die Stellung des vom Fahrer betätigbaren Fahrpedals abrufbar.
- Von dem Block Getriebebedienfeld 25 kann die Stellung wenigstens eines vom Fahrer des Fahrzeugs einzustellenden Wählschalters (z.B.: P, 1, 2, 3, N, D, Winterbetrieb, Economy/Sport-Betriebsmodus) abgefragt werden.
- Vom Block Motor 26 werden der Gangauswahl Motordaten wie Motordrehzahl, Motorlast und/oder Motortemperatur zugeführt.
- Im Block Fahrdynamikregelung 27 liegen Daten bzgl. des momentan vorliegenden fahrdynamischen Verhaltens vor.
- Mit dem Bezugzeichen 28 ist das Display im Blickfeld des Fahrers gekennzeichnet.
- Im Block Fahrertyp 22 wird eine Größe ermittelt, die über das Verhalten des Fahrers Aufschluß gibt. Hier wird im allgemeinen bewertet, ob dem Fahrer mehr an einer fahrleistungsorientierten Fahrweise oder mehr an einer verbrauchsoptimierten Fahrweise gelegen ist.
- Im Block Fahrsituation 21 wird eine Größe ermittelt, die die Fahrsituation repräsentiert, der das Fahrzeug momentan unterworfen ist [Berg-auf-Fahrt, Fahren auf glatter Fahrbahn (Winter), Fahren mit kaltem Motor (Warmlauf), Kurvenfahrt].

Die in der Figur 2 gezeigten Pfeile zwischen der Gangauswahl 20 und den Blöcken 21 bis 28 sollen konkrete Abfragebefehle seitens der Gangauswahl 20 darstellen. Auf entsprechende Befehle hin senden die Blöcke dann die gewünschten Informationen an die Gangauswahl 20. Die Kommunikation zwischen der Gangauswahl 20 und einzelner Blöcke kann allerdings auch dadurch geschehen, dass die entsprechenden Signale dauernd, also ohne spezielle Abfragebefehle seitens der Gangauswahl 20, zur Gangauswahl geleitet werden.

Die Abfrage des aktuellen Fahrertypwertes geschieht durch die Abfrage Ist_FT_X(i) im Allgemeinen durch einen beliebigen anderen Teil der Software, in dem vorliegenden Beispiel durch die Gangauswahl 20.

Da die vorliegende Erfindung den Block Fahrertyp 22 betrifft, soll dieser Block anhand der Figur 3 näher beschrieben werden.

Die Erkennung des Fahrertyps wird in dem Objekt Fahrertyp Block 22 zusammengefaßt. Dieses Objekt 22 enthält als Teilobjekte Verwaltermittel 36 und eine beliebige Anzahl von Lieferobjekte beziehungsweise Ermittlungselemente, die in dem vorliegenden Ausführungsbeispiel als Blöcke 31, 32, 33, 34, 35 gekennzeichnet sind.

In den einzelnen Lieferobjekten beziehungsweise Ermittlungselementen 31 bis 35 wird der aktuell vorliegende Fahrertyp ermittelt.

Die folgende Beschreibung eines Ausführungsbeispiels der Erfindung gliedert sich in zwei Bereiche. Zunächst wird der invariante Anteil beschrieben, der sich in der Struktur des Objektmodels widerspiegelt und unabhängig vom Kraftfahrzeughersteller bzw. Kunde und Projekt wiederverwendet werden kann. Anschließend wird eine spezifische Ausprägung der varianten Teile des erfindungsgemäßen Systems erläutert, zum einen als Beispiel und zur Verdeutlichung der Erfindung dienend, zum anderen ein neues Vorgehen bei der Ermittlung des Fahrertyps beschreibend.

Allgemeine Bestimmung des Fahrertyps

Der Fahrertyp erscheint in dieser Modellierung als Repräsentant der "persönlichen Eigenschaften" des Fahrers. In der aktuellen Situation beschränkt sich das im Wesentlichen auf den in der Getriebesteuerung benötigten Fahrertyp.

Wie schon erwähnt besitzt die hier beschriebene Variante einen Verwalter 36, einen Zähler 38 einen Ermittler 37 und sogenannte Lieferobjekte/Ermittlungselemente 31 bis 35. Die Lieferobjekte 31 bis 35 bewerten bestimmte Aspekte der Fahrertypermittlung und teilen das Ergebnis ihrer Bewertung dem Zähler 38 mit. Zusätzlich kann der reale Fahrer über das Getriebebedienfeld 25/Fig.2 bestimmte Fahrertypen oder Adaptionsverfahren vorgeben, mit denen der Fahrertyp zu ermitteln ist.

Das Objekt Fahrertyp 22 steuert die Fahrertyperkennung, speichert den aktuell ermittelten Fahrertyp und stellt ihn nach außen zur Verfügung. Die Ermittlung des Fahrertyps erfolgt also nicht bei jeder Abfrage desselben, sondern wird zyklisch z.B. alle 25 ms einmal vorgenommen.

Das Objekt Fahrertyp 22 holt sich vom Getriebebedienfeld 25 den vorgegebenen Grundtyp und das Adaptionsverfahren. Dies sind aus den reellen Bedienmöglichkeiten des Getriebebedienfeldes 25 abgeleitete formale Informationen (siehe bspw. die eingangs zitierte DE 199 63 468 A). Wenn ein Grundtyp G vorgegeben ist, dann wird dieser Grundtyp G der aktuelle Fahrertyp. Ansonsten wird der Fahrertyp adaptiert und übernommen (Verfahren V). Ist das vorgegebene Adaptionsverfahren "nicht adaptieren", so wird kein Fahrertyp ermittelt. In diesem Fall muß ein Grundtyp G vorgegeben sein, da sonst kein gültiger Fahrertyp bestimmt werden kann. Die in der Figur 4 dargestellte Tabelle zeigt die Interpretation beider Informationen die zwischen dem Getriebebedienfeld 25 und dem Objekt Fahrertyp 22 abgestimmt sein müssen.

Soll eine Adaption durchgeführt werden, so wird das Objekt Verwalter 36 aufgefordert, nach dem vorgegebenen Adaptionsverfahren (Tabelle in Figur 4) einen Fahrertyp zu ermitteln. Der Verwalter 36 hat die Aufgabe, die Beitragsermittlung der Lieferobjekte 31 bis 35 zu koordinieren. Die Beobachtung und Bewertung der Fahreraktionen in bestimmten Situationen wird den speziellen Lieferobjekten 31 bis 35 zugeordnet. Diese haben die Aufgabe, die Fahrerreaktionen in der ihnen zugeordneten Situation zu beobachten und zu bewerten. Eine Neubewertung des Fahrertyps wird erst dann vorgenommen, wenn alle Lieferobjekte 31 bis 35 die Chance hatten, einen Beitrag zu leisten.

Der Verwalter 36 ruft der Reihenfolge nach die verschiedenen Lieferobjekte 31 bis 35 zur Fahrertypbewertung auf, wobei jedes Lieferobjekt 31 bis 35 eine eindeutige Identifikation ID besitzt, anhand derer der Aufruf erfolgt. Dadurch ist der Verwalter 36 unabhängig von der Anzahl und der speziellen Eigenschaft der Lieferobjekte 31 bis 35. Eine beliebige Austauschbarkeit der Lieferobjekte 31 bis 35 setzt zudem voraus, dass sie alle die gleiche Schnittstelle zur Verfügung stellen im Sinne eines Stereotypen "Lieferobjekt für die Fahrertyperkennung". Um den Verwalter 36 vollkommen unabhängig von den Lieferobjekten 31 bis 35 gestalten zu können, ist es außerdem günstig, die ID's der Lieferobjekte 31 bis 35 als oder auf Funktionspointer abzubilden. Auf die spezielle Ausprägung folgender Lieferobjekte wird noch später in dieser Beschreibung näher eingegangen:

1. Anfahrbewertung 31
2. Gradientenbewertung 32
3. Kickdownbewertung 33
4. Fahrbetriebsbewertung 34
5. Sonderbewertung 35

Diese geben der Reihe nach einen Beitrag zum Bewertungszahler 38 ab. Dazu haben sie die folgenden Möglichkeiten:

- Erhöhen oder Erniedrigen des aktuellen Zählers um einen Beitrag.
- Setzen des Zählers auf einen bestimmten Wert.
- Setzen der oberen und der unteren Grenze des Zählers.

Wenn in der sequentiellen Bearbeitung der Lieferobjekte 31 bis 35 die Grenzen des Zahlers verändert werden, entsteht das Problem, wann diese Grenzen wieder verändert werden dürfen. Eine Lösung hierzu sei im Folgenden definiert:

1. Am Beginn eines Zyklus werden die Schranken so gesetzt, dass der erlaubte Bereich maximal wird.
2. Die Lieferobjekte 31 bis 35 werden entgegengesetzt ihrer Priorität aufgerufen.
3. Wollen mehrere Lieferobjekte 31 bis 35 die gleiche Grenze setzen, gewinnt in dem Zyklus das zuletzt aktive Lieferobjekt.

Eine analoge Lösung ergibt sich für das Setzen des Fahrertypwertes. Die Aufgaben der Lieferobjekte 31 bis 35 lassen sich in der Regel in folgende Phasen einteilen:

- Prüfen von Eingangsbedingungen. (Startphase).
- Wenn die Eingangsbedingungen erfüllt sind, Beobachtung der Fahreraktionen und gegebenenfalls Bewertung bis die Endebedingungen erfüllt sind.
- Wenn die Endebedingungen erfüllt sind, eventuell Bewertung der Fahreraktionen. Dabei können die Beiträge von unterschiedlicher Art sein.

Nach außen ist es nicht relevant, in welcher Phase sich ein Lieferobjekt 31 bis 35 befindet. Da die einzelnen Bewertungen (und damit die Lieferobjekte 31 bis 35) jedoch untereinander priorisiert sind, muß deutlich werden, wann ein Lieferobjekt ein anderes Lieferobjekt verdrängen kann. Dies geschieht, indem die Lieferobjekte nach außen eine Statusmeldung geben, wobei es nur jeweils den Status "Aktiv" und "Inaktiv" gibt. Neben dem Status eines Lieferobjekts ist es noch wichtig zu wissen, ob ein Lieferobjekt überhaupt appliziert (das heißt zum Einsatz kommen darf) ist und somit einen Beitrag leisten darf.

Der Verwalter 36 kennt alle Lieferobjekte 31 bis 35 und hat die Aufgabe, ihre Beitragsermittlung zu koordinieren. Er merkt sich, ob die Lieferobjekte appliziert sind und erhält von ihnen die Information, ob sie aktiv oder inaktiv sind. Die Ermittlung läuft zyklisch ab. Am Anfang des Zyklus kann bei Bedarf eine interne Initialisierung erfolgen. In jedem Zyklus werden alle Lieferobjekte in der Reihenfolge entsprechend ihrer Priorität aufgefordert, ihren Beitrag zu leisten. Der Beitrag besteht aus einem Zahlenwert, den der Zahler entgegennimmt und intern verarbeitet. Am Ende eines Zyklus wird aus dem resultierenden Zahlenwert durch das Objekt Ermittler 37 der Fahrertyp bestimmt.

Damit der Verwalter 36 die Priorisierung der Lieferobjekte 31 bis 35 kontrollieren kann, prüft er zunächst, ob das aufgerufene Lieferobjekt aktiv werden darf bzw. seine Aktivitäten fortsetzen kann. Dabei werden der "statische" und der "dynamische" Aspekt betrachtet:.

- Im statischen Aspekt wird geprüft, ob das jeweilige Lieferobjekt positiv oder negativ appliziert ist. Im negativen Fall darf es nicht aktiv werden, während im positiven Fall der dynamische Aspekt untersucht wird.

- Im dynamischen Aspekt wird geprüft, ob andere Lieferobjekte aktiv sind, die eine Aktivität des jeweiligen Lieferobjekts verhindern. In diesem Fall muß das jeweilige Lieferobjekt inaktiv werden. Jede der Bewertungen 31 bis 35 teilt dem Verwalter 36 mit, ob sie gerade aktiv ist. Der Verwalter 36 speichert diese Information. Zusätzlich ist im Verwalter 36 die Information hinterlegt, ob eine Bewertung 31 bis 35 aktiv werden darf, wenn schon andere Bewertungen aktiv gemeldet sind.

Die in der Figur 5 gezeigte Matrix soll dies verdeutlichen. Dabei bedeutet das Matrixelement 0, dass die zugeordnete Bewertung gleichzeitig aktiv werden kann. Das Matrixelement 1 bedeutet, dass das zugeordnete Bewertung nicht gleichzeitig aktiv werden kann. Wenn z.B. die Gradientenbewertung 32 aktiv ist (siehe Zeile, Gradientenbewertung), so dürfen die Sonder-, die Anfahr- und die Kickdownbewertung 35, 31, und 33 auch aktiv werden, die Fahrbetriebsbewertung 34 jedoch nicht (siehe eine "1" in der Spalte Fahrbetriebsbewertung im Kreuzpunkt mit der Zeile Gradientenbewertung). Die Applikation der Priorisierung ist durch die Verwendung einer eindeutigen ID für jedes Lieferobjekt besonders einfach, da diese ID z.B. direkt in einer Tabelle eingetragen werden kann.

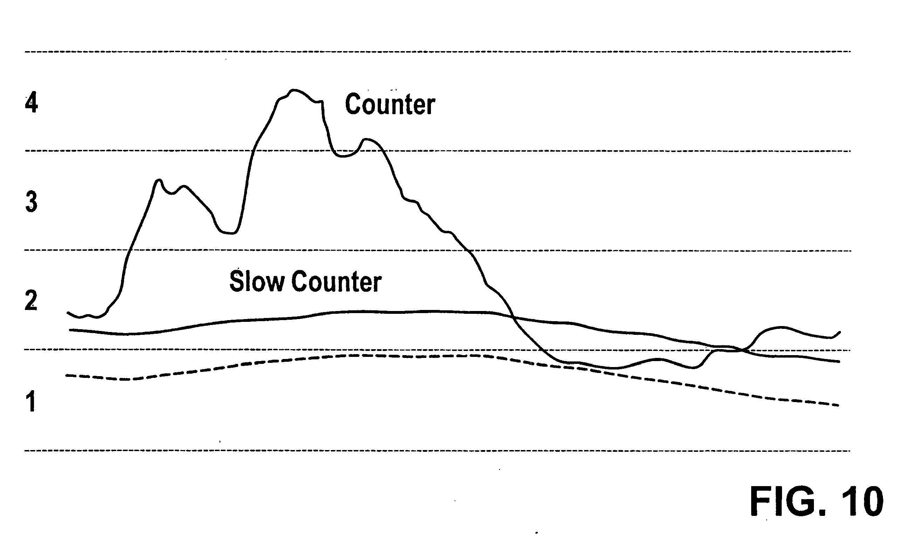

Das Objekt Zähler 38 hat die wesentliche Aufgabe, Beiträge, die von den Lieferobjekten in Form von Zahlen geliefert werden, zu sammeln. Denkbar sind die Grundversionen Maximumbilder (bildet das Maximum der gesammelten Zahlen), Minimumbilder und Addierer. Der Zähler 38 ermittelt in dieser Ausführungsform im Zusammenhang mit den noch im Folgenden zu beschreibenden Lieferobjekten aus dem aktuellen Zähler den sogenannten Slow-Counter. Dieser folgt sehr langsam dem Zähler in eigens definierten Grenzen, wobei die Dynamik eingestellt werden kann. Der aktuelle Fahrertypbewertungszähler wird durch den Slow-Counter nach unten begrenzt d.h., der Zähler kann nie kleiner als der Slow-Counter abzüglich eines Offsets werden. Zusätzlich kann auch entschieden werden, ob der Slow-Counter auch bei Fahrzeugstillstand an den Zähler angepaßt werden soll oder nicht. Hintergrund ist eine längerfristige Charakterisierung des Fahrerverhaltens, wobei eine schnelle Veränderung in Richtung "Fahrleistungsorientierung" bzw. "Sport" (den höheren Zählerwerten ist zumeist ein sportliches Verhalten zugeordnet) jederzeit möglich ist. In der Figur 10 ist beispielhaft die Korrelation zwischen dem Zähler und dem Slow-Counter dargestellt.

Das Objekt Ermittler 37 hat die Aufgabe, aus dem aktuellen Zahlenwert des Zählers 38 am Ende eines Zyklus den daraus resultierenden Fahrertyp zu berechnen und dem Objekt Fahrertyp 22 zur Verfügung zu stellen.

Grundlage der Fahrertypermittlung im Zähler 38 ist ein Zahleninterwall, das in vier Teilintervalle aufgeteilt wird, wobei jedes Teilintervall einem Fahrertyp zugeordnet wird. Die Ermittlung erfolgt, indem ein Zähler innerhalb des Zahleninterwalls durch die Aktionen des Fahrers in bestimmten Situationen verändert wird. Am Ende eines Ermittlungszyklus wird geprüft, in welchem Teilintervall sich der Zähler befindet. Der aktuelle Fahrertyp ergibt sich dann aus dem diesem Teilintervall zugeordneten Typ. Bspw. kann es vier Fahrertypen 1, 2, 3 und 4 geben, die untereinander in folgender Weise geordnet sind: 1 < 2 < 3 < 4. Diesen formalen Fahrertypen wird zumeist eine Bedeutung zugeordnet wie z.B. in folgendem Beispiel:

- sehr ökonomisch

- ökonomisch

- sportlich

- sehr sportlich

Wenn alle Bewertungen 31 bis 35 ihren Beitrag geleistet haben, wird vom Fahrertypermittler 37 aus dem aktuellen Zählerstand (und keinesfalls aus dem Slow-Counter) der neue Fahrertyp berechnet. Der aktuelle Fahrertyp wird dann vom Ermittler 37 an das Objekt Fahrertyp 22 zurückgegeben und dort als neuer aktueller Fahrertyp gespeichert, der über die Abfrage Ist_FT_X(i) abgerufen werden kann.

Die obige Einteilung in vier Fahrertypen ist rein willkürlich gewählt, es ist eine beliebige Anzahl denkbar. Außerdem hat sich folgende Vorgehensweise als vorteilhaft erwiesen:

Zusätzlich zum Fahrertyp wird noch ein Zugehörigkeitswert ermittelt, der z.B. angibt, in welchem Bereich zwischen 2 Typen sich der Zählerwert gerade befindet. Hierzu sei auf das in der Figur 6 dargestellte Beispiel verwiesen. In diesem Beispiel wäre dann folgende Fahrertypangabe möglich:

([X, y}, 0,2)

Der Fahrertyp befindet sich im Intervall zwischen Typ X und Typ Y und gehört zu 80% zu Typ X und zu 20% zu Typ Y. Fahrertypangaben dieser Art sind besonders hilfreich, wenn in Abhängigkeit vom Zugehörigkeitswert in fahrertypabhängigen Kennlinien oder Kennfeldern interpoliert werden soll.

Spezielle Ausprägung der Lieferobjekte zur Fahrertypbestimmung

Jedes spezielle Lieferobjekt 31 bis 35 entspringt einem Stereotyp eines Lieferobjekts. Es muß auf die sich nur in der als Parameter übergebenen ID unterscheidenden Aufrufe des Verwalters 36 reagieren und die Schnittstellen des Verwalters 36 (z.B. aktiv oder inaktiv melden) und Zählers 38 (z.B. erhöhen des Zählers um einen Beitrag) bedienen können. Die Unterschiede zwischen den Lieferobjekten 31 bis 35 liegen also nur in den speziell beobachteten Fahrzeug- und Fahrergrößen, die zur Ermittlung des Fahrertyps bewertet werden. Die hier im Folgenden vorgestellten Lieferobjekte entspringen der Vorgabe, auf möglichst einfache, schnelle und leicht applizierbare Art und Weise die Fahrweise des Fahrers zu adaptieren.

Anfahrbewertung

Die Anfahrbewertung erkennt 3 Zustände:

- Stillstand:

   Bei der Abtriebsdrehzahl Null.

- Anfahren:

   So lange die Abtriebsdrehzahl kleiner als eine Schwelle ist.

- Normalfahrt:

   Bei einer Abtriebsdrehzahl, die größer als eine Schwelle ist. Es ist nur ein Wechsel in den Zustand "Stillstand" möglich.

Eine Bewertung erfolgt nur im Zustand Anfahren, bei Fahrzeugstillstand erfolgt keine Bewertung. Zum Bewerten wird der Fahrertypbewertungzähler auf den Wert einer Kennlinie in Abhängigkeit von der Fahrpedalstellung gesetzt. Hierzu ist in der Figur 7 ein Beispiel dargestellt.

Gradientenbewertung

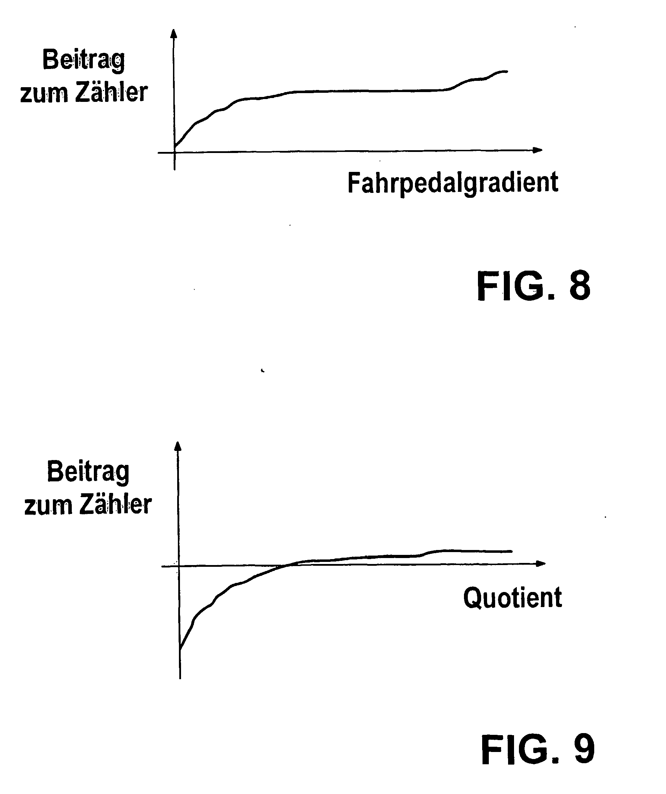

Die Gradientenbewertung 32 setzt sich in den aktiven Zustand, sobald ein positiver Fahrpedalgradient größer einer Schwelle erkannt wird. Sobald diese Schwelle unterschritten wird, setzt sich die Gradientenbewertung 32 wieder passiv. Abhängig vom Betrag des Fahrpedalgradienten wird ein Bewertungswert aus einer Kennlinie ausgelesen, der zum Fahrertypbewertungszähler hinzuaddiert wird. Werden mehrere positive Gradienten direkt nacheinander erkannt (also zwischendurch kein Wechsel in den passiven Zustand), so wird zum Fahrertypbewertungszähler nur die Differenz zum vorigen Bewertungswert hinzuaddiert, wenn diese Differenz positiv ist. Ein Beispiel hierfür ist in der Figur 8 zu sehen.

Kickdownbewertung

Die Kickdownbewertung 33 setzt sich aktiv, sobald Kickdown (Durchtreten des Fahrpedals) erkannt wird. Dann wird jeweils nach Ablauf einer Zeitstufe der Fahrertypbewertungszähler 38 um einen bestimmten Wert erhöht.

Fahrbetriebsbewertung

Die Fahrbetriebsbewertung 34 ist immer aktiv. Sie dient dazu, aus dem aktuellen Fahrzustand des Fahrzeugs einen passenden Fahrertyp zu bestimmen, wenn keine andere Bewertung aktiv ist, die besondere Zustände abdeckt. Dazu wird der Quotient aus Fahrpedal und Abtriebsdrehzahl ermittelt:

$$\text{Quotient} = 10 * \text{Fahrpedal/Abtriebsdrehzahl}$$

Die Multiplikation mit dem Faktor 10 dient nur dazu, den Quotienten in einen zur Auswertung günstigeren Bereich abzubilden. Jeweils nach Ablauf einer Zeitstufe wird aus dem Quotienten über eine Kennlinie ein neuer Bewertungswert ermittelt, der zum Fahrertypbewertungszähler dazu addiert wird. Eine beispielhafte Zuordnung Beitrag zum Zähler zu Quotient ist der Figur 9 zu entnehmen.

Sonderbewertung

Die Sonderbewertung 35 dient der Bewertung verschiedener spezieller Sonderfälle, die in die Fahrertyperkennung mit eingehen sollen, aber dafür eigentlich keiner eigenen Bewertung bedürfen, wie z.B. Hot Mode, Warmlauf, Winter oder Sportbewertung.
Die Sonderbewertung 35 reagiert auf den Adaptivmodus, der vom Objekt Fahrertyp 22 beim Getriebebedienfeld 25 abgefragt und dem Verwalter 36 zur Fahrertypermittlung weitergegeben wurde; der aktuelle Adaptivmodus wird beim Aufruf der Sonderbewertung 35 als Parameter mit übergeben. Ist der aktuelle Adaptivmode normal, so wird die Sonderbewertung 35 nicht aktiv. Soll jedoch "sportlich" adaptiert werden, so wird die untere Grenze des Fahrertypbewertungszählers 38 auf einen Minimalwert angehoben. Wird vom Sportmodus wieder in den Normalmodus zurück gewechselt, so wird die untere Grenze wieder aufgehoben und zusätzlich wird ein Betrag vom Fahrertypbewertungszähler 38 abgezogen.

Zusammenfassung lassen sich mit Blick auf verschiedene Kriterien folgende Vorteile mit der Erfindung erzielen:

Kriterium Applizierbarkeit:

- Die Priorität verschiedener Aspekte für die Fahrertypbestimmung läßt sich beliebig und ohne Veränderung von Code im Verwalter 36 applizieren.

Kriterium Erweiterbarkeit:

- Die Anzahl der Lieferobjekte 31 bis 35 ist praktisch unbegrenzt.
- Die Erweiterung der Fahrertyperkennung ist einfach, da die Erfindung fest definierte Schnittstellen zur Verfügung stellt. Für ein neues Lieferobjekt muß nur ein neuer Identifizierung-Code ID vergeben werden und beim Verwalter 36 bekannt gemacht werden.

Kriterium Funktionalität:

- Da die Verfahren zur eigentlichen Fahrertypbewertung nicht in das Verfahren zur Priorisierung eingehen, ist eine hohe Flexibilität gegenüber unterschiedlicher Anforderungen verschiedener Fahrzeughersteller gegeben.

Kriterium Wiederverwendbarkeit:

- Für unterschiedliche Anforderungen müssen nur die Lieferobjekte 31 bis 35 geändert werden, die Struktur zur Fahrertyperkennung bleiben jedoch konstant.
- Für gleiche Teilanforderungen in unterschiedlichem Kontext können durch die definierten Schnittstellen Lieferobjekte einfach ausgetauscht werden.
- Querverbindungen zwischen Lieferobjekten zur gegenseitigen Priorisierung, die eine Wiederverwendung stark behindern, werden durch die Priorisierung durch den Verwalter 36 vermieden.

**Patentansprüche**

1. System zur Einstellung einer Getriebeübersetzung bei einem in einem Kraftfahrzeug eingebauten Getriebe (53), mit wenigstens zwei Ermittlungselementen (31-35), mittels der aufgrund unterschiedlicher Ermittlungsmodi Werte ermittelt werden, die das Fahrverhalten des Fahrers des Kraftfahrzeugs repräsentieren, und Zählermitteln (38), mittels der abhängig von den ermittelten Werten wenigstens ein Zählerwert geändert wird, und Ermittlermitteln (37), die abhängig von dem momentanen Zählerwert einen Fahrertypwert ermitteln, der das Fahrverhalten des Fahrers des Kraftfahrzeugs repräsentiert, wobei die Getriebeübersetzung wenigstens abhängig von dem Fahrertypwert eingestellt wird,
**dadurch gekennzeichnet, dass**
Verwaltermittel (36) vorgesehen sind, welche die Ermittlungselemente (31-35) entsprechend einer vorgegebenen Priorität aufrufen und veranlassen, die ermittelten Werte als abgerufene Werte an die Zählermittel zu übermitteln, wobei die Ermittlungselemente (31-35) einheitliche Schnittstellen zu den Verwaltermitteln (36) und einheitliche Schnittstellen zu den Zählermitteln (37) aufweisen.

2. System nach Anspruch 1, **dadurch gekennzeichnet, dass** die Zählermittel (38) derart ausgestaltet sind, dass abhängig von den abgerufenen Werten

  - der Zählerwert erhöht oder erniedrigt wird,
  - der Zählerwert auf einen bestimmten Wert gesetzt wird und/oder
  - eine obere und/oder untere Grenze für den Zählerwert gesetzt wird.

3. System nach Anspruch 1, **dadurch gekennzeichnet, dass** die Verwaltermittel (36) derart ausgestaltet werden sind, dass wenigstens ein Ermittlungselement (31-35) nicht abgerufen wird.

4. System nach Anspruch 1, **dadurch gekennzeichnet, dass** die Verwaltermittel (36) derart ausgestaltet werden sind, dass dort abgespeichert ist, welche der Ermittlungselement (31-35) abrufbar und welche der Ermittlungselement (31-35) nicht abrufbar sind.

5. System nach Anspruch 1, **dadurch gekennzeichnet, dass** die Verwaltermittel (36) derart ausgestaltet werden sind, dass das Abrufen wenigstens eines der Ermittlungselemente (31-35) abhängig von der Ermittlung der Werte eines anderen der Ermittlungselemente (31-35) geschieht.

6. System nach Anspruch 1, **dadurch gekennzeichnet, dass** die Ermittlermittel (37) derart ausgestaltet sind, dass der momentane Zählerwert vorgebbaren Teilintervallen zugeordnet wird und aus der Zuordnung zu einem der Teilintervalle der Fahrertypwert ermittelt wird, der das Fahrverhalten des Fahrers des Kraftfahrzeugs repräsentiert.

7. System nach Anspruch 1, **dadurch gekennzeichnet, dass** die Ermittlungselemente (31-35) derart ausgestaltet sind, dass

- während des Anfahrvorgangs des Fahrzeugs die Stellung des vom Fahrer des Kraftfahrzeugs betätigten Fahrpedals zur Ermittlung eines ersten Wertes, der das Fahrverhalten des Fahrers des Kraftfahrzeugs repräsentiert, ausgewertet wird, und/oder
- die Änderungsgeschwindigkeit der Stellung des vom Fahrer des Kraftfahrzeugs betätigten Fahrpedals zur Ermittlung eines zweiten Wertes, der das Fahrverhalten des Fahrers des Kraftfahrzeugs repräsentiert, ausgewertet wird, und/oder
- das Überschreiten der Stellung des vom Fahrer des Kraftfahrzeugs betätigten Fahrpedals über einen vorgebbaren Schwellenwert zur Ermittlung eines dritten Wertes, der das Fahrverhalten des Fahrers des Kraftfahrzeugs repräsentiert, ausgewertet wird, und/oder
- ein vierter Wert, der das Fahrverhalten des Fahrers des Kraftfahrzeugs repräsentiert, von dem Quotienten aus der Stellung des vom Fahrer des Kraftfahrzeugs betätigten Fahrpedals und der Fahrgeschwindigkeit des Kraftfahrzeugs ermittelt wird.

## Claims

1. System for setting a gearbox transmission ratio in a gearbox (53) which is installed in a motor vehicle, having at least two detection elements (31-35) which detect, using different detection modes, values which represent the driving behaviour of the driver of the motor vehicle, and counter means (38) which change at least one counter value as a function of the detected values, and detection means (37) which detect, as a function of the instantaneous counter value, a driver type value which represents the driving behaviour of the driver of the motor vehicle, with the gearbox transmission ratio being set at least as a function of the driver type value, **characterized in that** administrator means (36) are provided which call the detection elements (31-35) in accordance with a predefined priority and cause the detected values to be transferred as called values to the counter means, with the detection elements (31-35) having uniform interfaces with the administrator means (36) and uniform interfaces with the counter means (37).

2. System according to Claim 1, **characterized in that** the counter means (38) are configured in such a way that, as a function of the called values

- the counter value is increased or decreased,
- the counter value is set to a specific value and/or
- an upper and/or lower limit is set for the counter value.

3. System according to Claim 1, **characterized in that** the administrator means (36) are configured in such a way that at least one detection element (31-35) is not called.

4. System according to Claim 1, **characterized in that** the administrator means (36) are configured in such a way that information indicating which of the detection elements (31-35) can be called and which of the detection elements (31-35) cannot be called is stored there.

**5.** System according to Claim 1, **characterized in that** the administrator means (36) are configured in such a way that at least one of the detection elements (31-35) is called as a function of the detection of the values of another of the detection elements (31-35).

**6.** System according to Claim 1, **characterized in that** the detection means (37) are configured in such a way that the instantaneous counter value is assigned to predefinable subintervals and the driver type value which represents the driving behaviour of the driver of the motor vehicle is determined from the assignment to one of the subintervals.

**7.** System according to Claim 1, **characterized in that** the detection elements (31-35) are configured in such a way that

- during the process of driving of the vehicle the position of the accelerator pedal which is activated by the driver of the motor vehicle is evaluated in order to detect a first value which represents the driving behaviour of the driver of the motor vehicle, and/or
- the rate of change of the position of the accelerator pedal which is activated by the driver of the motor vehicle is evaluated in order to detect a second value which represents the driving behaviour of the driver of the motor vehicle, and/or
- the position of the accelerator pedal activated by the driver of the motor vehicle being exceeded beyond a predefinable threshold value is evaluated in order to detect a third value which represents the driving behaviour of the driver of the motor vehicle, and/or
- a fourth value which represents the driving behaviour of the driver of the motor vehicle is determined from the quotient formed between the position of the accelerator pedal which is activated by the driver of the motor vehicle and the velocity of the motor vehicle.

**Revendications**

**1.** Système de réglage d'un rapport de transmission pour une boîte de vitesses (53) montée dans un véhicule automobile, comprenant

- au moins deux éléments de détermination (31-35) qui déterminent des valeurs à partir de différents modes de détermination représentant le comportement de conduite du conducteur du véhicule automobile,
- des moyens de comptage (38) qui modifient au moins une valeur du compteur en fonction des valeurs déterminées, et
- des moyens de détermination (37) qui déterminent, en fonction de la valeur instantanée du compteur, une valeur type du conducteur représentant le comportement de conduite du conducteur du véhicule automobile, le rapport de transmission étant réglé au moins en fonction de la valeur type du conducteur,

**caractérisé par**
des moyens de gestion (36) qui appellent et autorisent les éléments de détermination (31-35) conformément à une priorité prédéterminée pour transmettre aux moyens du compteur les valeurs déterminées sous forme de valeurs appelées, les éléments de détermination (31-35) présentant des interfaces unitaires par rapport aux moyens de gestion (36) et des interfaces unitaires par rapport au moyens de comptage (38).

**2.** Système selon la revendication 1,
**caractérisé en ce que**
les moyens de comptage (38) sont réalisés de telle sorte que, en fonction des valeurs appelées,

- la valeur du compteur est augmentée ou diminuée,
- la valeur du compteur est fixée sur une valeur définie, et/ou
- une limite supérieure et/ou inférieure est fixée pour la valeur du compteur.

**3.** Système selon la revendication 1,
**caractérisé en ce que**
les moyens du gestionnaire (36) sont réalisés de telle sorte qu'au moins un élément de détermination (31-35) n'est pas appelé.

**4.** Système selon la revendication 1,
**caractérisé en ce que**

les moyens de gestion (36) sont réalises pour stocker dans celui-ci quels éléments de détermination (31-35) peuvent être appelés et quels éléments de détermination (31-35) ne peuvent pas être appelés.

5. Système selon la revendication 1,
**caractérisé en ce que**
les moyens de gestion (36) sont réalisés de telle sorte que l'appel d'au moins un des éléments de détermination (31-35) se produit en fonction de la détermination des valeurs d'un autre des éléments de détermination (31-35).

6. Système selon la revendication 1,
**caractérisé en ce que**
les moyens de détermination (37) sont réalisés pour affecter la valeur instantanée du compteur à des intervalles partiels pouvant être prédéterminés et, à partir de l'affectation à l'un des intervalles partiels, on détermine la valeur type du conducteur qui représente le comportement de conduite du conducteur du véhicule automobile.

7. Système selon la revendication 1,
**caractérisé en ce que**
les éléments de détermination (31-35) sont réalisés de telle sorte que :

- pendant le processus de démarrage du véhicule, la position de la pédale d'accélérateur actionnée par le conducteur du véhicule automobile est exploitée pour déterminer une première valeur représentant le comportement de conduite du conducteur du véhicule automobile, et/ou
- la vitesse de modification de la position de la pédale d'accélérateur actionnée par le conducteur du véhicule automobile est exploitée pour déterminer une deuxième valeur représentant le comportement de conduite du conducteur du véhicule automobile, et/ ou

- le dépassement de la position de la pédale d'accélérateur actionnée par le conducteur du véhicule automobile au-dessus d'un seuil pouvant être prédéterminé est exploitée pour déterminer une troisième valeur représentant le comportement de conduite du conducteur du véhicule automobile, et/ ou
- une quatrième valeur représentant le comportement de conduite du conducteur du véhicule automobile est déterminée à partir du quotient de la position de la pédale d'accélérateur actionnée par le conducteur du véhicule automobile et de la vitesse de déplacement du véhicule automobile.

EP 1 348 086 B1

**FIG. 1**

FIG. 2

23 Fahrzeuggrößen

24 Fahrpedal

25 Getriebebedienfeld

26 Motor

27 Fahrdynamik-regelung

28 Display

20 Gangauswahl

Ist_FS_X(i)

21 Fahrsituation

Ist_FT_X(i)

22 Fahrertyp

S

55 Getriebe

EP 1 348 086 B1

Ist_FT_X(i)

Fahrertyp

22

36

Verwalter

37

Anfahrbewertung

31

Ermittler

32

Gradientenbewertung

33

Kickdownbewertung

38

Zähler

34

Fahrbetriebsbewertung

35

Sonderbewertung

FIG. 3

EP 1 348 086 B1

| Grundtyp | Adaptions-verfahren | Reaktion |
|---|---|---|
| NONE | V | aktueller Typ wird adaptierter Typ nach Verfahren V |
| G | NONE | aktueller Typ wird Grundtyp G, keine Adaption |
| G | V | aktueller Typ wird Grundtyp G, Adaption im Hintergrund nach Verfahren V |
| NONE | NONE | nicht erlaubt |

**FIG. 4**

EP 1 348 086 B1

**FIG. 5**

| Sonder-bewertung (35) | Fahrbetriebs-bewertung (34) | Kickdown-bewertung (33) | Gradienten-bewertung (32) | Anfahr-bewertung (31) | |
|:---:|:---:|:---:|:---:|:---:|:---:|
| 0 | 1 | 1 | 1 | 0 | Anfahr-bewertung (31) |
| 0 | 1 | 0 | 0 | 0 | Gradienten-bewertung (32) |
| 0 | 1 | 0 | 0 | 0 | Kickdown-bewertung (33) |
| 0 | 0 | 0 | 0 | 0 | Fahrbetriebs-bewertung (34) |
| 0 | 0 | 0 | 0 | 0 | Sonder-bewertung (35) |

EP 1 348 086 B1

Typ X                    Typ Y

Zählerwert

Aktueller Zählerwert

# FIG. 6

Zähler

Fahrpedal

# FIG. 7

Beitrag zum Zähler

Fahrpedalgradient

**FIG. 8**

Beitrag zum Zähler

Quotient

**FIG. 9**

Counter

Slow Counter

4

3

2

1

FIG. 10